(19) Europäisches Patentamt
European Patent Office
Office européen des brevets

(11) EP 1 278 022 A1

## (12) EUROPEAN PATENT APPLICATION
published in accordance with Art. 158(3) EPC

(43) Date of publication:
22.01.2003 Bulletin 2003/04

(21) Application number: 01921892.4

(22) Date of filing: 18.04.2001

(51) Int Cl.⁷: F24F 5/00

(86) International application number:
PCT/JP01/03330

(87) International publication number:
WO 01/081834 (01.11.2001 Gazette 2001/44)

(84) Designated Contracting States:
AT BE CH CY DE DK ES FI FR GB GR IE IT LI LU
MC NL PT SE TR
Designated Extension States:
AL LT LV MK RO SI

(30) Priority: 24.04.2000 JP 2000123191
30.06.2000 JP 2000197957

(71) Applicant: Daikin Industries, Ltd.
Osaka-shi, Osaka 530-8323 (JP)

(72) Inventors:
• KATAOKA, Hidehiko, DAIKIN INDUSTRIES, LTD.
Kusatsu-shi, Shiga 525-0044 (JP)
• SAKAMOTO, Shinichi,
DAIKIN INDUSTRIES, LTD.
Kusatsu-shi, Shiga 525-0044 (JP)

(74) Representative: HOFFMANN - EITLE
Patent- und Rechtsanwälte
Arabellastrasse 4
81925 München (DE)

## (54) BRANCH UNIT FOR AIR CONDITIONER

(57)     A branching unit of an air conditioner, the branching unit being capable of connecting either an outdoor unit of a multi-type air conditioner or an outdoor unit of a pair-type air conditioner with one or a plurality of indoor units that are freely selected from amongst the indoor units of a multi-type air conditioner or the indoor unit of a pair-type air conditioner. The branching unit 300 is constructed of branching pathways that branch the refrigerant lines between an outdoor liquid line connector port 301 and a plurality of indoor liquid line connector ports 302, and an electric valve 305 for decompressing the pressurized refrigerant that flows therein and a liquid line thermistor 306 for detecting the temperature of the refrigerant that flows therein are provided in each branching pathway.

Fig. 1

**Description**

Technical Field

The present invention relates to an air conditioner branching unit disposed between an outdoor unit and indoor units, and which serves to supply refrigerant to a plurality of indoor units. The present invention further relates to an air conditioner that employs this branching unit.

Background Art

With air conditioners having an outdoor unit and an indoor unit, there are both pair-type air conditioners, in which one outdoor unit is connected to one indoor unit, and multi-type air conditioners, in which one outdoor unit is connected to a plurality of indoor units.

With a pair-type air conditioner, there is one refrigerant line connector port on the outdoor unit and the indoor unit. A discharge line temperature sensor, an outdoor heat exchanger temperature sensor, an outdoor air temperature sensor, one decompression circuit, and the like are provided in the outdoor unit. In addition, a indoor heat exchanger sensor, a room temperature sensor, and the like are provided in the indoor unit.

With a multi-type air conditioner, one refrigerant line connector port is provided on the outdoor unit which can be connected to a plurality of indoor units, and both a refrigerant line port that can be connected to the outdoor unit and a signal input/output port are provided on the indoor units. The outdoor unit of this kind of multi-type air conditioner has a discharge line temperature sensor, an outdoor heat exchanger temperature sensor, an outdoor air temperature sensor, a gas line temperature sensor for each indoor unit connected to the outdoor unit, a decompression circuit for each indoor unit connected to the outdoor unit, and the like. In addition, a indoor heat exchanger sensor, a room temperature sensor, and a liquid line temperature sensor are provided in the indoor units.

In the event that the outdoor unit of the aforementioned pair-type air conditioner is connected to an indoor unit of a multi-type air conditioner, the liquid line sensor in the indoor unit will be worthless because it cannot be used.

In addition, because there is only one refrigerant line connector port provided in the outdoor unit of the pair-type air conditioner, the outdoor unit cannot be connected as is to a plurality of indoor units of a multi-type air conditioner or a plurality of indoor units of a pair-type air conditioner. Because of this, adding decompression circuits in the outdoor unit and increasing the number of refrigerant line connector ports thereon has been considered. Thus, it is not necessary to specify the indoor unit because there is normally a one-to-one correspondence between an outdoor unit and an indoor unit of a pair-type air conditioner, and a function that specifies each indoor unit like in a multi-type air conditioner is not provided. Because of this, even if there is an increase in the number of refrigerant line connector ports in the outdoor unit for a pair-type air conditioner, and these are connected to a plurality of indoor units, it will be impossible to normally control each indoor unit.

Furthermore, in the event that the indoor unit of a pair-type air conditioner is controlled by a multi-type air conditioner, the indoor unit of the pair-type air conditioner cannot be operated because it does not have the necessary liquid line temperature sensor, even if the indoor unit of the pair-type air conditioner is connected to the outdoor unit of a multi-type air conditioner.

The present invention provides an air conditioning branching unit which allows either an outdoor unit of a multi-type air conditioner or outdoor unit of a pair-type air conditioner to be connected to one or a plurality of indoor units of a multi-type air conditioner or a pair-type air conditioner.

Disclosure Of The Invention

The branching unit of the air conditioner according to the present invention serves to connect the outdoor unit of the air conditioner to an indoor unit, and comprises an outdoor connector, an indoor connector, and a branching line. The outdoor connector can be connected to either an outdoor unit of a multi-type air conditioner that is capable of connecting one outdoor unit to a plurality of indoor units, or an outdoor unit of a pair-type air conditioner that connects one outdoor unit to one indoor unit. The indoor connector can be connected to one or a plurality of indoor units that are freely selected from amongst the indoor units of a multi-type air conditioner or the indoor unit of a pair-type of air conditioner. The branching line connects the outdoor connector and the indoor connectors.

The outdoor unit of a multi-type air conditioner and the outdoor unit of a pair-type air conditioner both have a liquid line connector port and a gas line connector port. In this situation, the outdoor connector has one outdoor liquid line connector port that is connected to the liquid line connector port on the outdoor unit via a refrigerant line, and one outdoor gas line connector port that is connected to the gas line connector port on the outdoor unit.

In addition, the indoor units of a multi-type air conditioner and the indoor unit of a pair-type air conditioner each have a liquid line connector port and gas line connector port. In this situation, the indoor connector has a plurality of indoor liquid line connector ports that are connected to the liquid line connector ports on the indoor units via refrigerant lines, and a plurality of indoor gas line connector ports that are connected to the gas line connector ports on the indoor units.

A decompression circuit is provided between the outdoor liquid line connector port and the indoor liquid line connector port of the branching line, and a gas line temperature sensor is provided between the outdoor gas line connector port and the indoor gas line connector port.

In addition, a liquid line temperature sensor is provided between the outdoor liquid line connector port and the indoor liquid line connector port of the branching line.

Furthermore, a vapor heat exchanger for exchanging heat between refrigerant before it passes through the decompression circuit and refrigerant after it passes through the decompression circuit, is provided between the outdoor liquid line connector port and the indoor liquid line connector port.

In addition, it is preferable that the vapor heat exchanger has an outer tube and a pair of stop plates that block the outer tube at both ends thereof, refrigerant is introduced from the bottom of the outer tube into the interior of the outer tube before it passes through the decompression circuit, and the line that distributes refrigerant after it has passed through the decompression circuit is disposed along the bottom interior wall of the outer tube.

An air conditioner according to the present invention is comprised of an outdoor unit, a plurality of indoor units, and one branching unit. The outdoor unit has a liquid line connector port and a gas line connector port, and is an outdoor unit of a pair-type air conditioner in which one outdoor unit is connected to one indoor unit. The plurality of indoor units each have a liquid line connector port and an gas line connector port. The branching unit has a liquid line connector for connecting each liquid line connector port on the plurality of indoor units with the liquid line connector on the outdoor unit, and a gas line connector for connecting each gas line connector port on the plurality of indoor units with the gas line connector on the outdoor unit. The branching unit also has a decompression circuit provided on the liquid line connector, and a gas line temperature sensor provided on the gas line connector.

The plurality of indoor units may include indoor units from pair-type air conditioners.

The plurality of indoor units may include indoor units from multi-type air conditioners that are capable of connecting a plurality of indoor units to one outdoor unit.

Furthermore, the plurality of indoor units may include indoor units from pair-type air conditioners and indoor units from multi-type air conditioners.

An air conditioner according to another aspect of the present invention is comprised of an outdoor unit, a plurality of indoor units, and a plurality of branching units. The outdoor unit has a plurality of pairs of liquid line connector ports and gas line connector ports, and is an outdoor unit of a multi-type air conditioner in which one outdoor unit can be connected to a plurality of indoor units. The plurality of indoor units each have a liquid line connector port and an gas line connector port, and are indoor units for a pair-type air conditioner that connects one outdoor unit with one indoor unit. The plurality of branching units each have a liquid line connector for connecting each liquid line connector port on the plurality of indoor units with the liquid line connector on the outdoor unit, and a gas line connector for connecting each gas line connector port on the plurality of indoor units with the gas line connector on the outdoor unit. The branching unit also has a decompression circuit provided on the liquid line connector, and a gas line temperature sensor provided on the gas line connector.

Note that the air conditioner may further be comprised of a multi-type indoor unit having a liquid connector port and a gas connector port that are directly connected to the liquid connector port and the gas connector port on the outdoor unit of a multi-type air conditioner.

Brief Description Of The Drawings

Fig. 1 is a block diagram of a pair-type outdoor unit connected to a pair-type indoor unit.
Fig. 2 is a block diagram of a pair-type outdoor unit connected to a pair-type indoor unit and a multi-type indoor unit.
Fig. 3 is a block diagram of a multi-type outdoor unit connected to a pair-type indoor unit.
Fig. 4 is a block diagram of a multi-type outdoor unit connected to a pair-type indoor unit and a multi-type indoor unit.
Fig. 5 is a diagram which shows the interior structure of a branching unit.
Fig. 6 is a perspective view of a refrigerant brancher.
Fig. 7 is a longitudinal section of a vapor heat exchanger.
Fig. 8 is a cross-section of a vapor heat exchanger.
Fig. 9 is a block diagram showing the general structure of an outdoor unit and a branching unit.
Fig. 10 is a graph showing the relationship between the operational frequency of a compressor and rate of refrigerant circulation.
Fig. 11 is a graph that shows the relationship between the aperture pulse of an electric valve and the rate of air flow.
Fig. 12 is a flowchart showing an example of electric valve control.
Fig. 13 is a flowchart showing an example of electric valve control.
Fig. 14 is a functional block diagram of a branching unit controller.
Fig. 15 is an example of a translation table.

Best Mode For Carrying Out The Invention

[Branching unit that can connect a pair-type and a multi-type]

The structure of a branching unit that can connect and use any combination of indoor units from pair-type air conditioners and multi-type air conditioners will be described.

<Pair-type outdoor unit + pair-type indoor units>

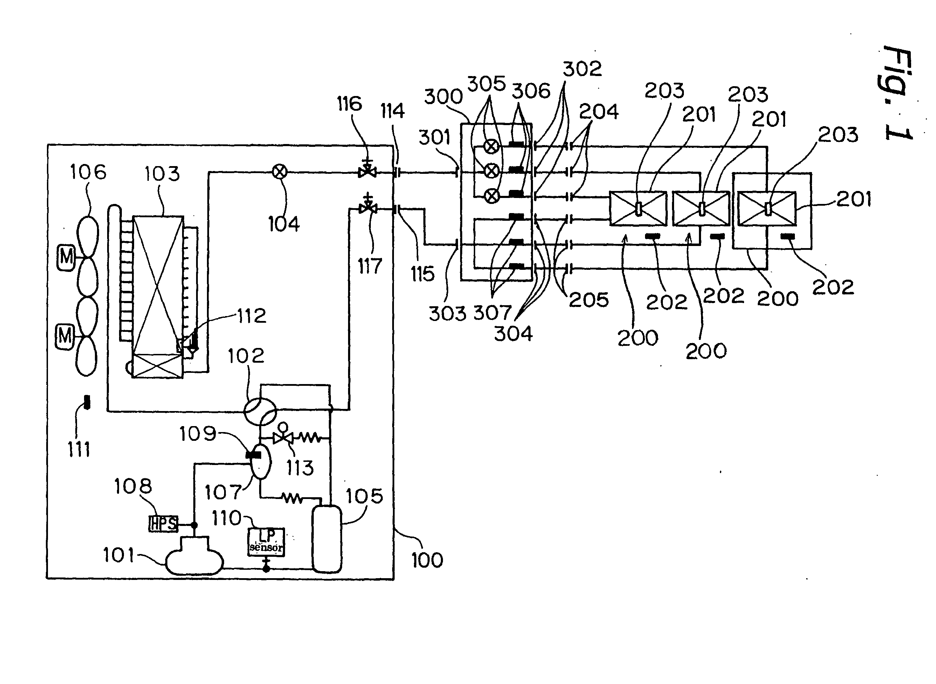

Fig. 1 shows one pair-type outdoor unit 100 connected to a plurality of pair-type indoor units 200.

The pair type outdoor unit 100 is comprised of a compressor 101, a four way directional control valve 102, an outdoor heat exchanger 103, a decompression valve 104, and an accumulator 105. A discharge pressure protection switch 108 for detecting an abnormal rise in the discharge pressure is provided on the discharge side of the compressor 101, and an inlet pressure sensor 110 for detecting the inlet pressure is provided on the inlet side of the compressor 101.

In addition, an oil separator 107 for separating the lubricating oil included in the refrigerant and returning it to the accumulator 105 is provided on the discharge side of the compressor 101. A discharge line thermistor 109 for detecting the temperature on the discharge side of the compressor 101 is installed in the oil separator 107.

A pressure regulating valve 113 is provided in the path that connects the outlet of the oil separator 107 and the inlet of the accumulator 105. In addition, an outside air thermistor 111 for detecting the outside air temperature, and an outdoor heat exchange thermistor 112 for detecting the temperature of the outdoor heat exchanger 103, are provided in the outdoor unit 100.

A liquid line connector port 114 and a gas line connector port 115 are provided in the outside unit 100. Inside the outdoor unit 100, the decompression electric valve 104 is connected to the liquid line connector port 114, and the four way directional control valve 102 is connected to the gas line connector port 115. A liquid line shut off valve 116 and a gas line shut off valve 117 are provided on the inner sides of each connector port.

Each pair-type indoor unit 200 is comprised of an indoor heat exchanger 201, and the refrigerant lines connected to the indoor heat exchangers 201 are connected to liquid line connector ports 204 and gas line connector ports 205.

In addition, a room temperature thermistor 202 for detecting the indoor room temperature, and an indoor heat exchange thermistor 203 for detecting the temperature of the indoor heat exchanger 201 are provided in the indoor unit 200.

In Fig. 1, the air conditioner is constructed such that there are three pair-type indoor units 200 connected together, and the same parts in each of the indoor units 200 are referred to with the same reference numerals. This pair-type outdoor unit 100 and the plurality of pair-type indoor units 200 are connected together via a branching unit 300.

A branching unit 300 is comprised of one outdoor liquid line connector port 301 that is connected to the liquid line connector port 114 on the outdoor unit 100, a plurality of indoor liquid line connector ports 302 that are connected to the liquid line connector ports 204 on the plurality of indoor units 200, one outdoor gas line connector port 303 that is connected to the gas line connector port 115 on the outdoor unit 100, and a plurality of indoor gas line connector ports 304 that are connected to the gas line connector ports 205 on the plurality of indoor units 200. There are three indoor liquid line connector ports 302 and three indoor gas line connector ports 304, and they are only for the use of the indoor units 200 connected thereto. In addition, a branched line is formed from the outdoor liquid line connector port 301 to each indoor liquid line connector port 302, and likewise a branched line is formed from the outdoor gas line connector port 303 to each indoor gas line connector port 304.

A plurality of electric valves 305 for reducing the pressure of the refrigerant that passes therethrough, and a plurality of liquid line thermistors 306 for detecting the temperature of the refrigerant that passes therethrough, are each provided along the branched lines that lead from the outdoor liquid line connector port 301 inside the branching unit 300 to each indoor liquid line connector port 302. In addition, a plurality of gas line thermistors 307 that detect the temperature of the refrigerant that passes therethrough are each provided along the branched lines that lead from the outdoor gas line connector port 303 inside the branching unit 300 to each indoor gas line connector port 304.

Because the branching unit 300 comprises liquid line thermistors 306 that detect the temperature of the refrigerant inside the liquid lines of the indoor units, temperature control for each of a plurality of pair-type indoor units 200 that do not have liquid line sensors can be conducted by connecting them to this branching unit 300.

The decompression of the liquid line can be controlled by setting the aperture of the decompression valve 104 provided in the outdoor unit 100, and by adjusting the aperture of the electric valves 305 provided in the branching unit 300. In addition, the decompression valve 104 and the electric valves 305 can be constructed such that they are controlled in a composite manner.

<Pair-type outdoor unit + multi-type indoor unit + pair-type indoor unit>

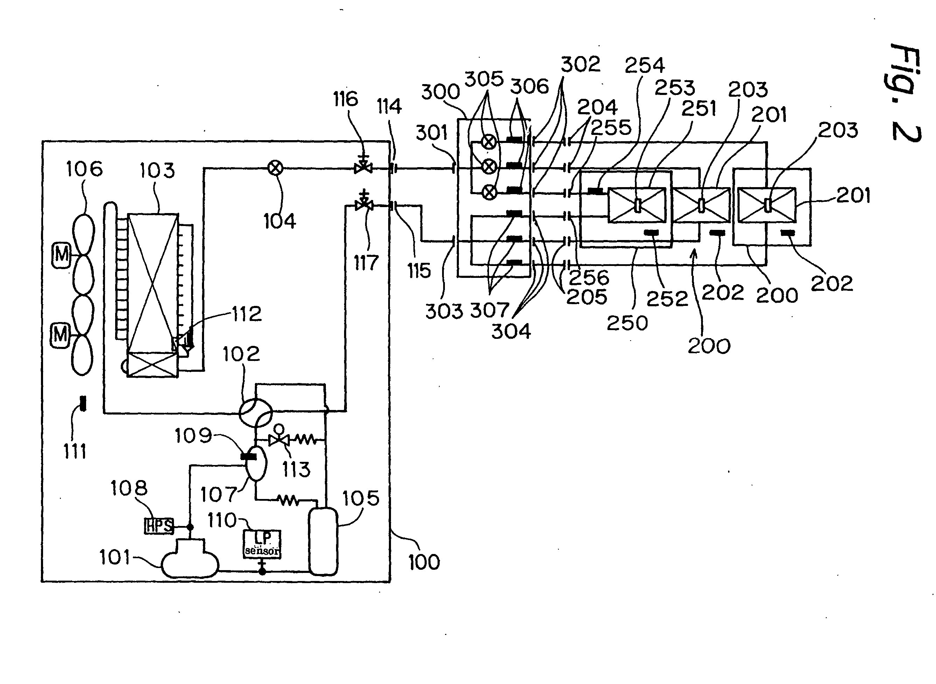

Fig. 2 shows a situation in which one pair-type outdoor unit 100 is connected to a multi-type indoor unit 250 and pair-type indoor units 200.

The construction of the pair-type outdoor unit 100 and the pair-type indoor units 200 are identical to that shown in Fig. 1, and each part will be referred to with the same reference numeral and this a description of these parts will be omitted. In addition, the branching unit 300 can be constructed in the same manner as shown in Fig. 1, and thus a description of it will be omitted.

The multi-type indoor unit 250 is comprised of an indoor heat exchanger 251, and the indoor heat exchanger 251 is connected to a liquid line connector port 255 and a gas line connector port 256 via outdoor lines.

In addition the indoor unit 250 is comprised of a temperature thermistor 252, an indoor heat exchange thermistor 253 for detecting the temperature of the indoor heat exchanger 251, and a liquid line thermistor 254 for detecting the temperature of the refrigerant that passes through the liquid line.

When constructed in this manner, temperature control can be conducted even if the detection data from either the liquid line thermistor 254 provided in the multi-type indoor unit 250 or the liquid line thermistor 306 provided in the branching unit 300 are employed. In addition, with the pair-type outdoor unit 100, the multi-type indoor unit 250 can be used as is by employing the branching unit 300. Other than the example shown in Fig. 2, the branching unit 300 can also be connected and used with a plurality of multi-type indoor units 250.

<Multi-type outdoor unit + pair-type indoor units>

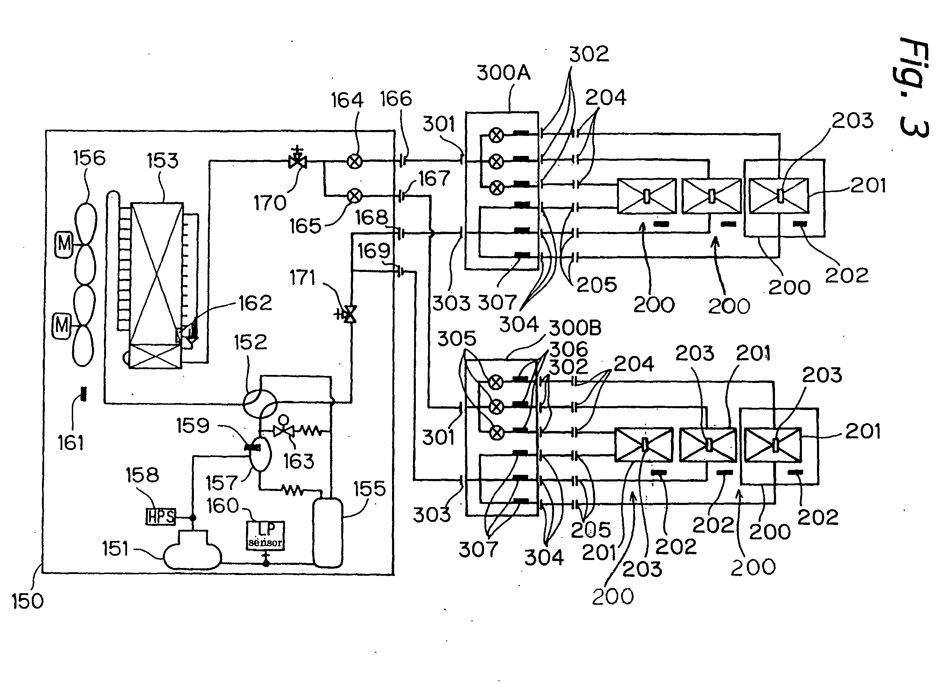

Fig. 3 shows the situation in which one multi-type outdoor unit 150 is connected to a plurality of pair-type indoor units 200.

The multi-type outdoor unit 150 is comprised of a compressor 151, a four way directional control valve 152, an outdoor heat exchanger 153, and an accumulator 155. A discharge pressure protection switch 158 for detecting an abnormal rise in the discharge pressure is provide on the discharge side of the compressor 151, and an inlet pressure sensor 160 for detecting the inlet pressure is provided on the inlet side of the compressor 151.

In addition, an oil separator 157 for separating the lubricating oil included in the refrigerant and returning it to the accumulator 155 is provided on the discharge side of the compressor 151. A discharge line thermistor 159 for detecting the temperature on the discharge side of the compressor 151 is installed in the oil separator 157.

A pressure regulating valve 163 is provided in the path that connects the outlet of the oil separator 157 and the inlet of the accumulator 155. In addition, an outside air thermistor 161 for detecting the outside air temperature, and an outdoor heat exchange thermistor 162 for detecting the temperature of the outdoor heat exchanger 153, are provided in the outdoor unit 150.

In addition, liquid line connector ports 166, 167 and gas line connector ports 168, 169 are provided in the outside unit 150. Inside the outdoor unit 150, decompression electric valves 164, 165 are connected to the liquid line connector ports 166, 167, and the four way directional control valve 152 is connected to the gas line connector ports 168, 169. In addition, a liquid line shut off valve 170 is provided on the inner side of the liquid line connector ports 166, 167, and a gas line shut off valve 171 is provided on the inner side of the gas line connector ports 168, 169.

The pair-type indoor unit 200 is identical to the one shown in Fig. 1, and thus a description thereof will be omitted.

Here, two branching units 300A, 300B are provided. The outdoor liquid line connector port 301 on one branching unit 300A is connected to the outdoor liquid line connector port 166 on the outdoor unit 150, and the outdoor gas line connector port 303 on the branching unit 300A is connected to the outdoor gas line connector port 169 on the outdoor unit 150. In addition, the outdoor liquid line connector port 301 on the other branching unit 300B is connected to the outdoor liquid line connector port 166 on the outdoor unit 150, and the outdoor gas line connector port 303 on the branching unit 300B is connected to the outdoor gas line connector port 169 on the outdoor unit 150.

The branching units 300A, 300B are each connected to three pair-type indoor units 200, for a total of six pair-type indoor units 200 connected thereto.

By employing these types of branching units 300A, 300B, the detection data from the liquid line thermistors 306 provided in each branching unit 300A, 300B can be employed, and temperature control can be conducted. Thus, even if a plurality of pair-type indoor units 200 that do not have liquid line temperature sensors are connected to a multi-type outdoor unit 150, they can still be operated.

<Multi-type outdoor unit + pair-type indoor unit + multi-type indoor unit>

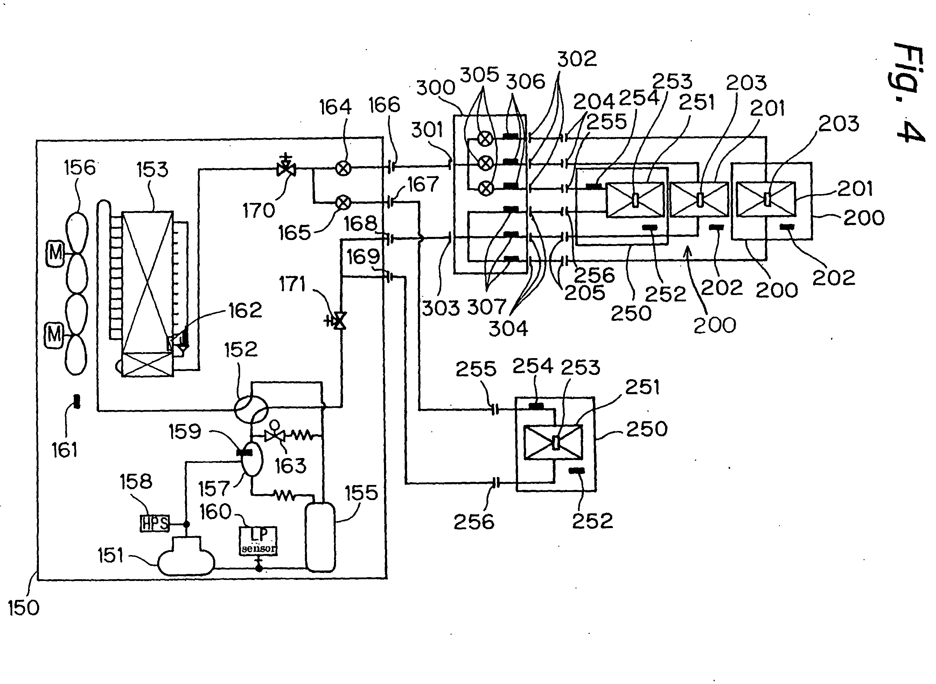

Fig. 4 shows a situation in which one multi-type outdoor unit 150 is connected to a multi-type indoor unit 250 and pair-type indoor units 200. Here, the example shown is one multi-type of indoor unit 250 and two pair-type indoor units 200 connected to one group of connector ports on one multi-type outdoor unit 150 via a branching unit 300, and one multi-type indoor unit 250 connected to another group of connector ports remaining on the multi-type outdoor unit 150.

The multi-type outdoor unit 150 is identical to that shown in Fig. 3, and thus the details thereof will be omitted.

An outside liquid line connector port 301 and an outside gas line connector port 303 on the branching unit 300 are connected to a liquid line connector port 166 and a gas line connector port 168 on the outside unit 150. In addition, a liquid line connector port 255 and a gas line connector port 256 on the multi-type indoor unit 250 are connected to a liquid line connector port 167 and a gas line connector port 169.

One multi-type indoor unit 250 and two pair-type indoor units 200 are connected to the branching unit 300. The construction of these indoor units are identical to that shown in Figs. 1 to 3, and thus the details of these will be omitted.

Thus, by employing the branching unit 300, it will be possible to connect more indoor units than the number of connector ports on the multi-type outdoor unit 150. In addition, because the liquid line temperature sensor in an indoor unit needed to control a multi-type air conditioner can be substituted by the liquid line thermistor 306 inside the branching unit 300, a pair-type indoor unit 200 can be connected to a multi-type outdoor unit 150, and can also be combined with a multi-type indoor unit 250.

As shown above, temperature control can be conducted for each indoor unit by providing electric valves 305 and liquid line thermistors 306 inside the branching unit 300 for each indoor unit connected thereto, and operational control can be conducted even if an arbitrary combination of outdoor and indoor units for multi-type air conditioners and pair-type air conditioners are employed.

[Internal construction of the switching unit]

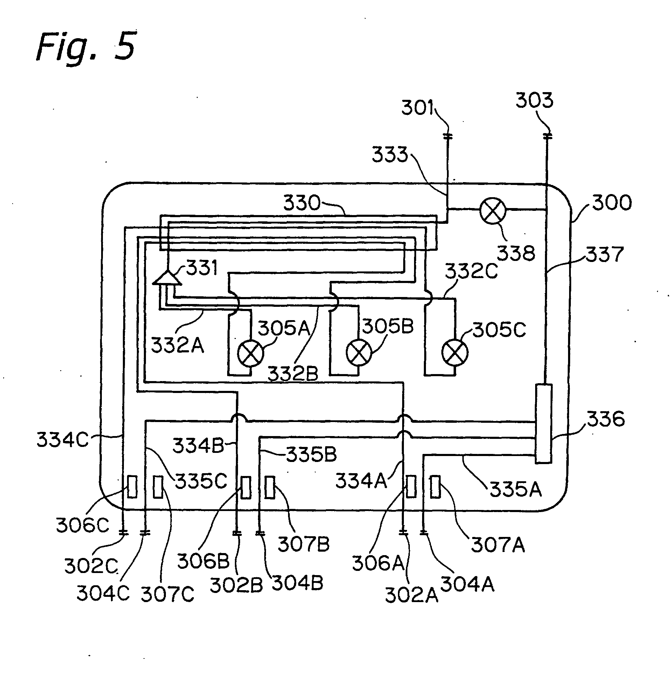

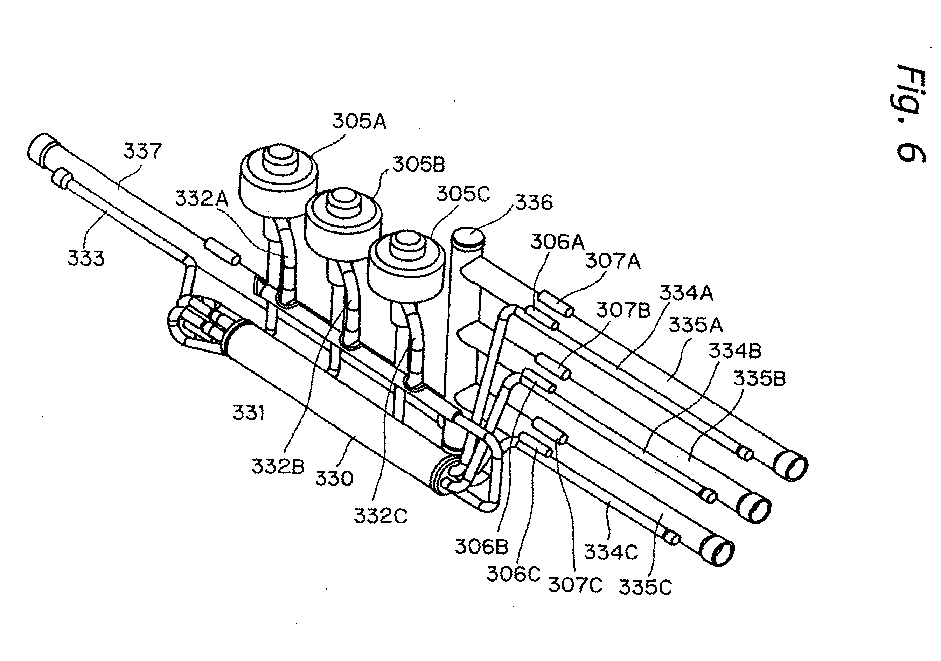

Figs. 5 and 6 show the construction of the branching portion inside the branching unit 300.

A branching portion that branches the refrigerant lines is constructed inside the branching unit 300 between the outdoor liquid line connector port 301, the outdoor gas line connector port 303 and the indoor liquid line connector ports 302A to 302C, and the indoor gas line connector ports 304A to 304C.

A liquid line 333 connected to the outdoor liquid line connector port 301is branched to branch lines 332A, 332B, and 332C via a liquid line branching portion 331 after being introduced to a vapor heat exchanger 330. Electric valves 305A to 305C are respectively provided to each branch line 332A to 332C, and the output of the electric valves 305A to 305C are introduced to the vapor heat exchanger 330.

Connecting lines 334A to 334C that lead from the vapor heat exchanger 330 on each branch line 332A to 332C are respectively connected to indoor liquid line connector ports 302A to 302C.

Connecting lines 335A to 335C are respectively connected to indoor gas line connector ports 304A to 304C., and each connecting line 335A to 335C is connected to a gas line 337 via a gas line branching portion 336. In addition, a pressure regulating valve 338 for regulating pressure is provided between the liquid line 333 and the gas line 337.

Liquid line thermistors 306A to 306C and gas line thermistors 307A to 307C are provided on the connecting lines 334A to 334C and 335A to 335C in the vicinity of the indoor liquid line connector ports 302A to 302C and the indoor gas line connector ports 304A to 304C, and serve to detect the temperature of the refrigerant that passes through the interiors thereof.

<Vapor heat exchanger>

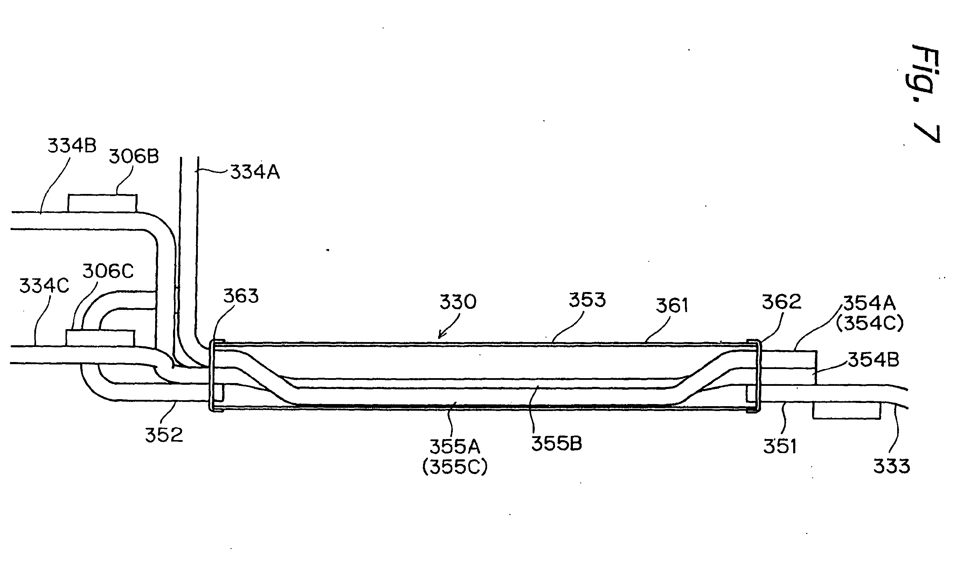

The vapor heat exchanger 330 is constructed as shown in Fig. 7.

In the vapor heat exchanger 330, an outer tube 353 whose inner diameter is bigger than the liquid line 333 is connected between a refrigerant introduction member 351 for introducing refrigerant into the vapor heat exchanger 330 from the liquid line 333 when the air conditioner is being operated and a refrigerant discharge member 352 for discharging refrigerant to the electric valves 305A to 305C from the vapor heat exchanger 330.

The outer tube 353 is constructed from a middle tube 361 that is cylindrical in shape, and closing plates 362, 363 for closing both ends of the middle tube 361. As shown in the figure, the refrigerant introduction member 351 is placed near the bottom of the vapor heat exchanger 330, and is installed such that it passes through the closing plate 362. In addition, the refrigerant discharge member 352 is placed near the bottom of the vapor heat exchanger 330, and is installed such that it passes through the closing plate 363.

In addition, decompressed refrigerant lines 354A to 354C that discharge and guide refrigerant from the electric valves 305A to 305C in the branch lines 332A to 332C are introduced into the outer tube 353 of the vapor heat exchanger 330 and are brought together by inner lines 355A to 355C. The inner lines 355A to 355C are discharged to the exterior of the vapor heat exchanger 330 at the opposite side of the decompressed refrigerant lines 354A to 354C, and are brought together by the connector lines 334A to 334C.

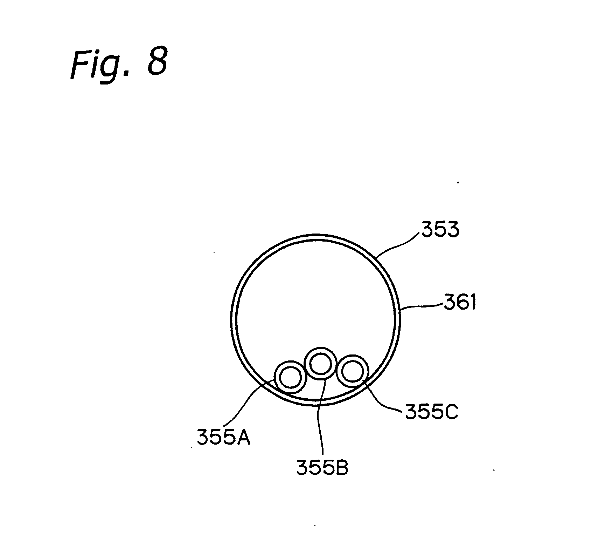

The inner lines 355A to 355C are in the central portion of the interior of the middle tube 361, and as shown in Fig. 8, are disposed along the lower inner wall of the middle tube 361.

In a branching unit 300 constructed in this manner, high temperature refrigerant supplied from the outdoor heat exchanger during cooling is supplied via the liquid line 333. The high temperature refrigerant is supplied to the interior of the outer tube 353 of the vapor heat exchanger 330 from a refrigerant introduction member 351, and is discharged to electric valves 305A to 305C via the refrigerant discharge member 352 and the liquid line branching portion 331.

In addition, the refrigerant decompressed by the electric valves 305A to 305C is supplied inside the inner lines 355A to 355C of the vapor heat exchanger via the decompressed refrigerant lines 354A to 354C.

The high temperature refrigerant supplied inside the outer tube 353 of the vapor heat exchanger from the refrigerant introduction member 351 of the liquid line 333 is supercooled and discharged from the refrigerant discharge member 352 by means of heat exchange between the decompressed low temperature refrigerant inside the inner tubes 355A to 355C.

Here, the refrigerant introduction member 351 and the refrigerant discharge member 352 are respectively attached to the bottom portion of the closing plates 362, 363, and can efficiently guide liquefied refrigerant to the electric valves 305A to 305C. In addition, because the inner tubes 355A to 355C are provided along the bottom of the inner wall of the outer tube 353, the refrigerant that flows from the refrigerant introduction member 351 to the refrigerant discharge member 352 comes into contact with the outer surface of the inner tubes 355A to 355C.

Because of this, even in situations in which there are two streams of refrigerant supplied from the outdoor heat exchanger to the liquid line 333, the refrigerant discharge member 352 and the intake portions of the electric valves 305A to 305C can reliably seal the liquid so that heat exchange takes place between the outer tube 353 of the vapor heat exchanger 330 and the inner tubes 355A to *355C.* Thus, the generation of excessive flow noise caused by refrigerant that flows through electric valves 305A to 305C can be prevented.

[Transmission of information between the outer unit and the branching unit]

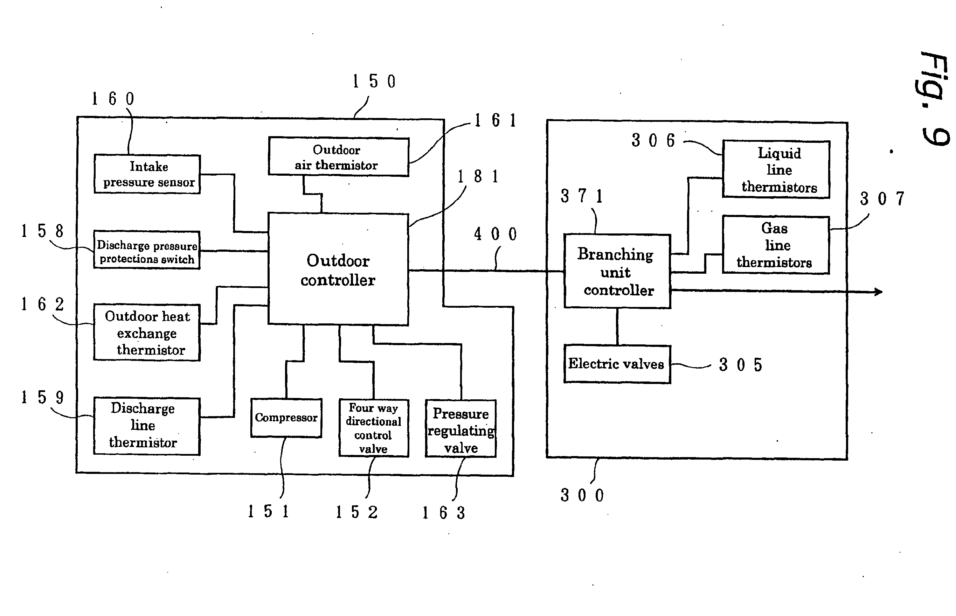

A control block of the outdoor unit and the branching unit is shown in Fig. 9. Here, a multi-type outdoor unit will be used for the outdoor unit.

The outdoor unit 150 is comprised of an outdoor controller 181 that includes a microprocessor, a ROM, a RAM, and a variety of interfaces.

A variety of sensors are connected to the outdoor controller 181, such as a discharge pressure protection switch 158, a discharge line thermistor 159, an intake pressure sensor 160, an outdoor air thermistor 161, and an outdoor heat exchange thermistor 162, and the detection signals from each sensor are input thereto.

In addition, the outdoor controller 181 is constructed such that the control of each member during operation occurs by supplying control signals to the items connected thereto, such as the compressor 151, the four way directional control valve 152, and the pressure regulating valve 163.

The branching unit 300 is comprised of a branching unit controller 371 that includes such items as a microprocessor, a ROM, a RAM, and a variety of interfaces, all of which are identical with those used in the outdoor unit 150.

A plurality of liquid line thermistors 306 and gas line thermistors 307 are connected to the branching unit controller 371 in accordance with the number of indoor units connected to the branching unit 300. The branching unit controller 371 is constructed such that the detection signals from each sensor are input thereto.

In addition, a plurality of electric valves 305 are connected to the branching unit controller 371 in accordance with the number of indoor units connected to the branching unit 300. The branching unit controller 371 transmits control signals to each respective electric valve 305, and is constructed such that it regulates the apertures thereof.

A transmission line 400 is provided between the outdoor controller 181 and the branching unit controller 371, and a variety of data are capable of being input and output via the transmission line 400. In addition, a transmission line is provided between the branching unit controller 371 and each of the plurality of indoor units connected to the branching unit 300, and a variety of data is capable of being input and output between the branching unit controller 371 and the indoor units.

The outdoor controller 181 controls the operation of the air conditioner by controlling the operational frequency of the compressor 151 in accordance with a variety of conditions during operation. In addition, the branching unit controller 371 controls the operation of the air conditioner by controlling the aperture pulse of the electric valves 305 in accordance with a variety of conditions during operation.

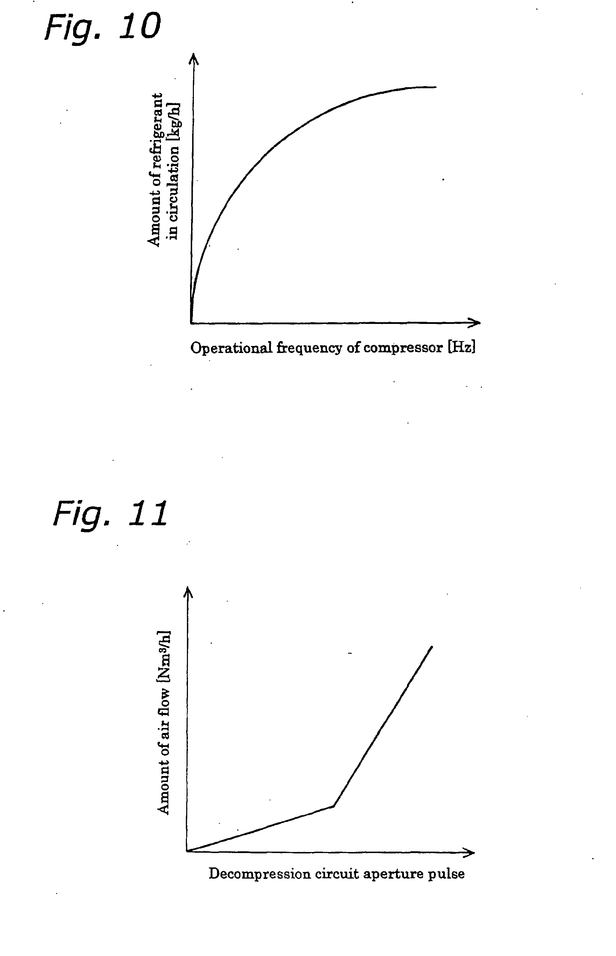

Fig. 10 shows the relationship between the operational frequency that is supplied to the compressor 151 and the amount of refrigerant that flows inside the refrigerant circuit. In addition, Fig. 11 shows the relationship between the aperture pulse supplied to the electric valves 305 inside the branching unit 300 and the amount of air flow at that time.

In situations in which data relating to the operational frequency of the compressor 151 is transmitted and received between the outdoor controller 181 and the branching unit controller 371, the amount of refrigerant in circulation is calculated in accordance with the operational frequency, and this data is transmitted. In addition, in situations in which data relating to the aperture pulse of the electric valves 305 is transmitted and received between the outdoor controller 181 and the branching unit controller 371, the amount of air flow is calculated in accordance with the aperture pulse, and this data is transmitted. Because of this, even in situations in which a different type of outdoor unit and branching unit are combined, the control input of the electric valves 305 can be determined in accordance with the amount of refrigerant in circulation and the amount of air flow, and there will be a large degree of freedom with the installation.

An example is provided below of the input and output of control data between the outdoor controller 181 and the branching unit controller 371 on the amount of refrigerant in circulation and the amount of air flow of the electric valves, and the control of the electric valves 305.

<Optimization of the degree of supercooling at each outlet of an indoor heat exchanger during heating>

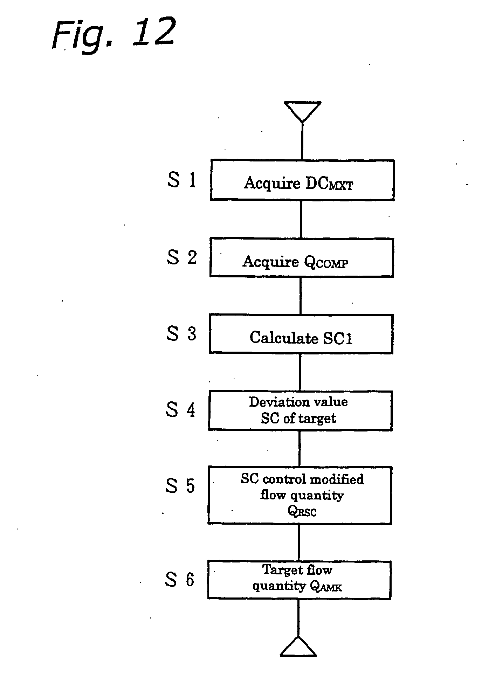

The flowchart shown in Fig. 12 will be employed to describe the control block that is run inside the branching unit 300 in order to optimize the degree of supercooling at each outlet of an indoor heat exchanger during heating.

At step S1, the temperatures of each indoor heat exchanger are acquired from the indoor units to which they are connected, and the maximum value $DC_{MXT}$ is obtained for each. At step S2, the quantity of refrigerant in circulation $Q_{COMP}$ transmitted from the outdoor controller 181 is acquired.

At step S3, the quantity of refrigerant in circulation $Q_{COMP}$ acquired at step S2 is employed, and the target supercooling temperature at the outlet of the indoor heat exchangers SC1 is obtained. Here, in determining the target SC1, if we assume that coefficient related to the quantity of refrigerant in circulation $Q_{COMP}$ is $K_{SC1}$, and the offset value when determining the target SC1 is $K_{SC2}$, then SC1 can be obtained by

$$SC1 = K_{SC1}*Q_{COMP} - K_{SC2}.$$

At step S4, the deviation value SC of the target value SC1 of the supercooling temperature at the outlet of the indoor heat exchangers, and the actual supercooling temperature of the indoor heat exchangers, is obtained. Here, this can be obtained by

$$SC = (|DC_{MXT} - DL|) - SC1.$$

Here, DL is the liquid line temperature detected by a liquid line thermistor, and the liquid line thermistor 306 provided in the branching unit 300 can be used to detect this temperature. When a liquid line thermistor is provided in an indoor unit, the liquid line temperature detected by this liquid line thermistor can also be employed.

At step S5, a modified flow quantity $Q_{RSC}$ of the electric valves needed to control the supercooling temperature of the indoor heat exchangers (SC) is obtained. Here, if we assume that $K_{PWS}$ is the coefficient of a controller P, and $K_{IWS}$ is the coefficient of a controller I, within a PID control parameter that determines the electric valve modification quantity that employs the deviation between the target SC and the actual SC, and $SC_Z$ is the previous value of the deviation in SC obtained by sampling, then $Q_{RSC}$ can be obtained by

$$Q_{RSC} = K_{PWS}*((SC - SC_Z) + K_{IWS}* (SC + SC_Z)).$$

However, when $Q_{RSC} \leq Q_{HENWS}$, then $Q_{RSC}$ is

$Q_{RSC} = Q_{HENWS}$ ($Q_{HENWS}$: the lowest value of the modified flow quantity (minus value)).

At step S6, the target flow quantity $Q_{AMK}$ of the electric valve 305 is corrected. Here, $Q_{AMK}$ can be obtained by

$$Q_{AMK} = Q_{AMK} + Q_{RSC}.$$

<Optimization of the quantity of refrigerant distributed during cooling>

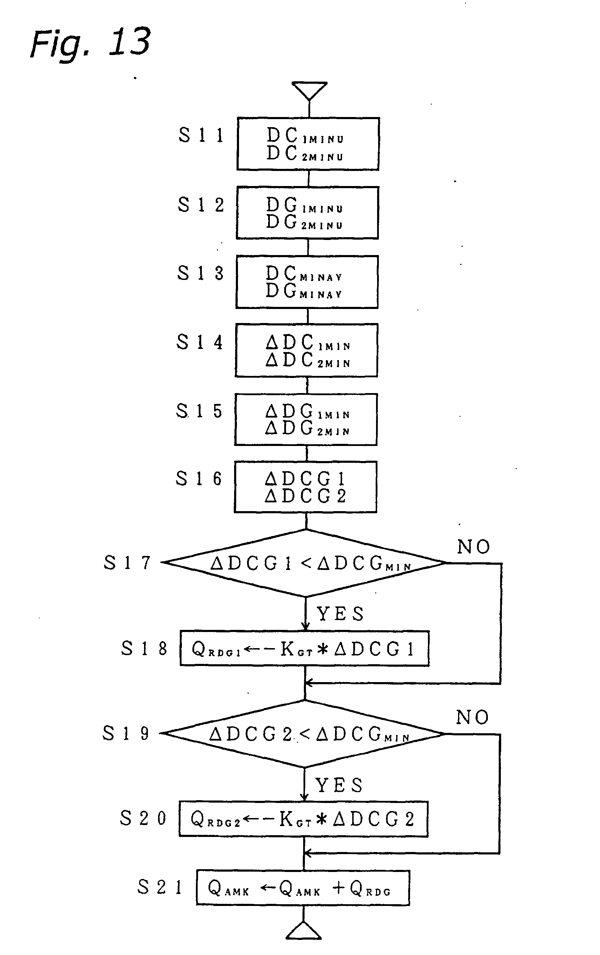

The flowchart shown in Fig. 13 will be employed to describe the control block for optimizing the quantity of refrigerant distributed during cooling. Here, we will consider a situation in which a multi-type outdoor unit is connected to two branching units.

At step S11, a MIN value of the intermediate temperature of the heat exchangers in the indoor units connected to the branching units during operation is obtained for each branching unit, and are $DC_{1MINU}$ and $DC_{2MINU}$.

At step S12, a MIN value of the gas line temperature of the indoor units connected to the branching units during operation is obtained for each branching unit, and are $DG_{1MINU}$ and $DG_{2MINU}$.

At step S13, the average values of the MIN value of the intermediate temperature of the indoor heat exchangers and the MIN value of the gas line temperature are calculated, and each are $DC_{MINAV}$, $DG_{MINAV}$.

At step S14, the difference between the MIN value of the intermediate temperature of each of the indoor heat exchangers and the average MIN value of the intermediate temperature of the indoor heat exchangers is calculated for each branching unit, and these are $\Delta DC_{1MIN}$, $\Delta DC_{2MIN}$. The calculation of $\Delta DC_{1MIN}$, $\Delta DC_{2MIN}$ can be obtained by

$$\Delta DC_{1MIN} = DC_{1MINU} - DC_{MINAV}$$

$$\Delta DC_{2MIN} = DC_{2MINU} - DC_{MINAV}.$$

At step S15, the difference between the MIN value of the gas line temperature of each indoor unit and the average value of the MIN value of the gas line temperature is calculated for each branching unit, and these are $\Delta DG_{1MIN}$, $\Delta DG_{2MIN}$. The calculation of $\Delta DG_{1MIN}$, $\Delta DG_{2MIN}$ can be obtained by

$$\Delta DG_{1MIN} = DG_{1MINU} - DG_{MINAV}$$

$$\Delta DG_{2MIN} = DG_{2MINU} - DG_{MINAV}.$$

At step S16, the differences between the intermediate temperature difference of the heat exchangers $\Delta DC_{MIN}$ and the gas line temperature difference $\Delta DG_{MIN}$ are obtained, and these are $\Delta DCG1$, $\Delta DCG2$.

$$\Delta DCG1 = \Delta DC_{1MIN} - \Delta DG_{1MIN}$$

$$\Delta DCG2 = \Delta DC_{2MIN} - \Delta DG_{2MIN}$$

At step S17, it is determined, with respect to the first branching unit, whether or not the difference $\Delta DCG1$ between the intermediate temperature difference of the heat exchangers $\Delta DC_{1MIN}$ and the gas line temperature difference $\Delta DG_{1MIN}$ is below a predetermined value $\Delta DCG_{MIN}$. If $\Delta DCG1 < \Delta DCG_{MIN}$, then the flow moves to step S18.

At step S18, the control input $Q_{RDG1}$ of the electric valves for the first branching unit is determined by the following formula.

$$Q_{RDG1} = -K_{GT}{}^{*}\Delta DCG1$$

However, $T_{GT}$ is the coefficient related to the deviation during gas line temperature control.

At step S19, it is determined, with respect to the second branching unit, whether or not the difference $\Delta DCG2$ between the intermediate temperature difference of the heat exchangers $\Delta DC_{2MIN}$ and the gas line temperature difference $\Delta DG_{2MIN}$ is below a predetermined value $\Delta DCG_{MIN}$. If $\Delta DCG2 < \Delta DCG_{MIN}$, then the flow moves to step S20.

At step S20, the control input $Q_{RDG2}$ of the electric valves for the second branching unit 300 is determined by the following formula.

$$Q_{RDG2} = -K_{GT}{}^{*}\Delta DCG2$$

At step S21, based on the control input $Q_{RDG}$ of the electric valves transmitted from the outdoor controller 181, the branching unit controller 371 calculates the control input $Q_{AMK}$ of the electric valves 305. Here, the $Q_{AMK}$ of the electric valves 305 can be calculated by

$$Q_{AMK} = Q_{AMK} + Q_{RDG}.$$

[Transmission translation function]

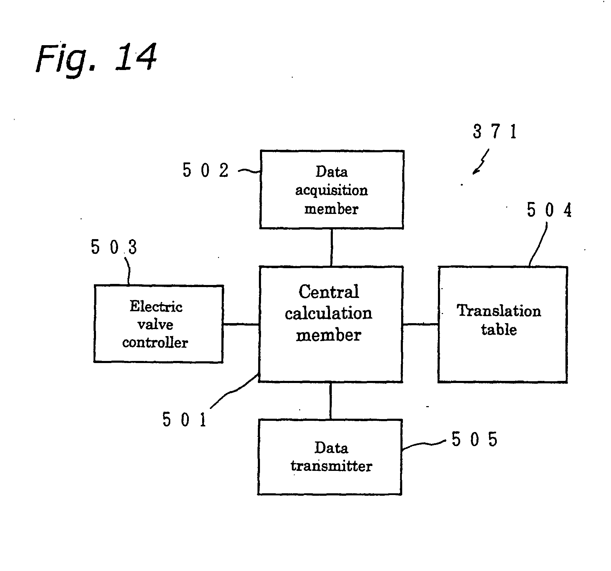

Fig. 14 shows a function block diagram of a branching unit controller disposed inside the branching unit.

The branching unit controller 371 is composed of a microchip that includes items such as a microprocessor, a ROM, a RAM, and a variety of interfaces, acquires a variety of data from an outdoor controller inside an outdoor unit and indoor controllers inside indoor units, controls the electric valves inside the branching units, and conducts data transfer between the outdoor controller and the indoor controllers.

The branching unit controller 371 is comprised of a central calculation member 501 that executes each arithmetic process. A data acquisition member 502 that acquires sensor data, other control data, and the like from the outdoor controller and the indoor controller is connected to the central calculation member 501. The data acquisition member 502 also acquires data relating to the type of outdoor unit and indoor units that is transmitted from the outdoor controller and the indoor controllers connected thereto.

In addition, an electric valve controller 503 that transmits control signals to the electric valves based upon the results of the calculations of the variety of data received by the data acquisition member 502, and controls the aperture of the electric valves, is connected to the central calculation member 501. A data transmitter 505 that transmits sensor data, control data, and the like to the outdoor controller disposed inside the outdoor unit and the indoor controllers disposed inside the indoor controllers is connected to the central calculation member 501.

A translation table 504 based upon additional types of indoor units and outdoor units is connected to the central calculation member 501. For example, in situations in which data signals of methods are used that are different from those of the outdoor unit and the indoor units connected thereto, the translation table 504 will convert the data signals to those that can be used. For example, in situations in which the data methods of thermosignals that are transmitted between a commercial air conditioner and a residential air conditioner are different, in situations in which the data method of various signals are different because old and new types are used, and the like, the data will be stored as a conversion table in the translation table 504.

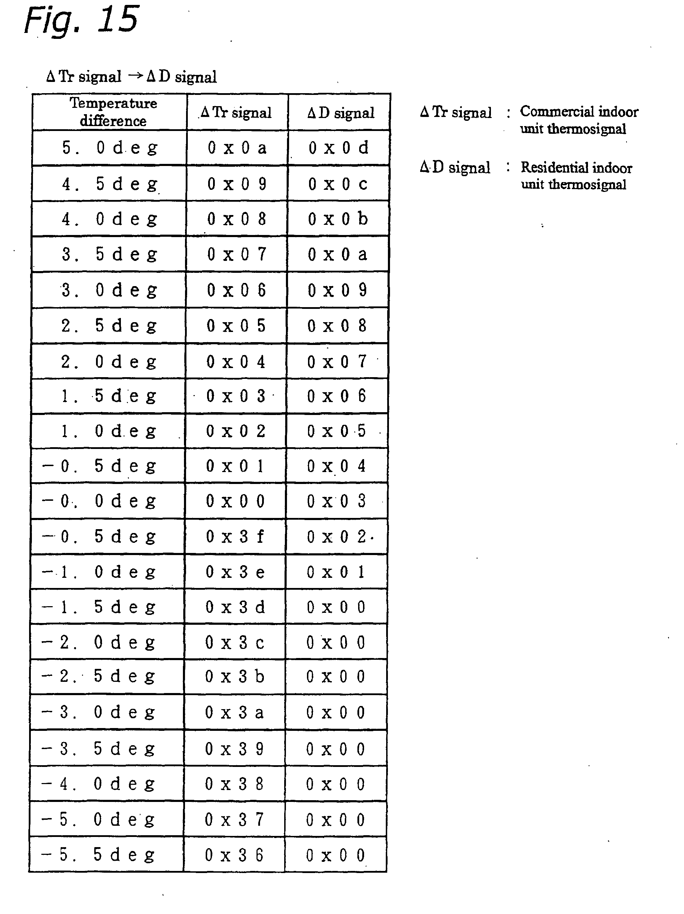

The thermosignals transmitted from the indoor units are the difference between the room temperature detected by the room temperature thermistor and the target temperature, and there are times when the data methods employed by the various units are different. For example, when we assume that a signal $\Delta Tr$ is a thermosignal that is transmitted from a commercial indoor unit, and a signal $\Delta D$ is a thermosignal transmitted from a residential indoor unit, an example of the thermosignal translation table is shown in Fig. 15.

In situations in which the outdoor unit connected to the branching unit is a commercial type and the indoor unit is a residential type, the thermosignal $\Delta D$ that is transmitted from the indoor unit is converted to the thermosignal $\Delta Tr$ that corresponds to the commercial type of unit. In the reverse situation, in which the outdoor unit connected to the branching unit is a residential type and the indoor unit is a commercial type, the thermosignal $\Delta Tr$ that is transmitted from the indoor unit is converted to the thermosignal $\Delta D$ for a residential type of unit, and transmitted to the outdoor unit.

Even with regard to other data, in situations in which the data methods are different due to different types of units, they can be appropriately converted by storing them inside the translation table 504. In addition, with regard to air conditioners that can be connected to the branching unit, in situations in which the data methods used therein are different, any combination of outdoor unit and indoor units is possible by storing all of the data methods inside the translation table 504.

Here, a transmission translation function can be provided in a branching unit disposed inside a refrigerant brancher for branching refrigerant lines from an outdoor unit to a plurality of indoor units, and even in situations in which it is provided between an outdoor unit and indoor units, and a relay unit relays refrigerant lines and transmission lines, it is possible to apply the identical construction.

Industrial Applicability

In the branching unit of the air conditioner according to the present invention, it is possible to employ an outdoor unit of a multi type of air conditioner and use pair type of indoor units, and it is possible to connect more indoor units than the number of connector ports. In addition, it is possible to employ an outdoor unit of a pair type of air conditioner and operate a plurality of indoor units, and it is possible to employ indoor units from either a pair-type air conditioner or a multi-type air conditioner.

**Claims**

1. A branching unit (300) of an air conditioner for connecting an outdoor unit of the air conditioner to one or a plurality of indoor units, comprising:

   an outdoor connector that can be connected to either an outdoor unit (150) of a multi-type air conditioner that is capable of connecting one outdoor unit (150) to a plurality of indoor units (250), or an outdoor unit (100) of a pair-type air conditioner that connects one outdoor unit (100) to one indoor unit (200);
   an indoor connector that can be connected to one or a plurality of indoor units that are freely selected from amongst the indoor units (250) of a multi-type air conditioner or the indoor unit (200) of a pair-type air conditioner; and
   a branching line that connects the outdoor connector and the indoor connector.

2. The branching unit of an air conditioner as set forth in claim 1, wherein
   the outdoor unit of a multi-type air conditioner and the outdoor unit of a pair-type air conditioner both have a liquid line connector port and a gas line connector port; and
   the outdoor connector has one outdoor liquid line connector port that is connected to the liquid line connector port on the outdoor unit via a refrigerant line, and one outdoor gas line connector port that is connected to the gas line connector port on the outdoor unit.

3. The branching unit of an air conditioner as set forth in claim 2, wherein the indoor units of a multi-type air conditioner and the indoor unit of a pair-type air conditioner each have a a liquid line connector port and a gas line connector port; and
   the indoor connector has a plurality of indoor liquid line connector ports that are connected to the liquid line connector ports on the indoor units via refrigerant lines, and a plurality of indoor gas line connector ports that are connected to the gas line connector ports on the indoor units.

4. The branching unit of an air conditioner as set forth in claim 3, wherein a decompression circuit (305) is provided between the outdoor liquid line connector port and the indoor liquid line connector port of the branching line; and
   a gas line temperature sensor (307) is provided between the outdoor gas line connector port and the indoor gas line connector port.

5. The branching unit of an air conditioner as set forth in claim 4, wherein a liquid line temperature sensor (306) is provided between the outdoor liquid line connector port and the indoor liquid line connector port of the branching line.

6. The branching unit of an air conditioner as set forth in claim 5, wherein a vapor heat exchanger (330) for exchanging heat between refrigerant before it passes through the decompression circuit (305) and refrigerant after it passes through the decompression circuit, is provided between the outdoor liquid line connector port and the indoor liquid line connector port.

7. The branching unit of an air conditioner as set forth in claim 6, wherein the vapor heat exchanger (330) has an outer tube (353) and pair of stop plates (362, 363) that block both ends thereof; and
   refrigerant is introduced from the bottom of the outer tube into the interior of the outer tube before it passes through the decompression circuit (305), and a line that distributes refrigerant after it has passed through the decompression circuit is disposed along the bottom interior wall of the outer tube.

8. A air conditioner, comprising:

   an outdoor unit having a liquid line connector port and a gas line connector port, the outdoor unit. (100) being a pair-type air conditioner in which one outdoor unit (100) is connected to one indoor unit (200);

a plurality of indoor units each having a liquid line connector port and an gas line connector port; and

a branching unit (300) having a liquid line connector for connecting each liquid line connector port on the plurality of indoor units with the liquid line connector on the outdoor unit, and a gas line connector for connecting each gas line connector port on the plurality of indoor units with the gas line connector on the outdoor unit, a decompression circuit provided on the liquid line connector, and a gas line temperature sensor provided on the gas line connector.

9. The air conditioner as set forth in claim 8, wherein the plurality of indoor units include indoor units (200) from pair-type air conditioners.

10. The air conditioner as set forth in claim 8, wherein the plurality of indoor units include indoor units (250) from multi-type air conditioners that are capable of connecting a plurality of indoor units to one outdoor unit.

11. The air conditioner as set forth in claim 8, wherein the plurality of indoor units include indoor units (200) from pair-type air conditioners and indoor units (250) from multi-type air conditioners.

12. An air conditioner, comprising:

an outdoor unit of a multi-type air conditioner in which one outdoor unit (150) can be connected to a plurality of indoor units (250), the outdoor unit (150) having a plurality of pairs of liquid line connector ports and gas line connector ports; a plurality of indoor units (200) for a pair-type air conditioner that connect one outdoor unit (100) with one indoor unit (200), the plurality of indoor units each having a liquid line connector port and an gas line connector port; and

a plurality of branching units (300) each have a liquid line connector for connecting each liquid line connector port on the plurality of indoor units with the liquid line connector on the outdoor unit, and a gas line connector for connecting each gas line connector port on the plurality of indoor units with the gas line connector on the outdoor unit, the branching unit also having a decompression circuit provided on the liquid line connector, and a gas line temperature sensor provided on the gas line connector.

13. The air conditioner as set forth in claim 12, further comprising a multi-type indoor unit (250) having a liquid connector port and a gas connector port that are directly connected to the liquid connector port and the gas connector port on the outdoor unit (150) of the multi-type air conditioner.

Fig. 1

EP 1 278 022 A1

*Fig. 2*

# Fig. 3

# Fig. 4

Fig. 5

*Fig. 6*

*Fig. 7*

*Fig. 8*

## Fig. 9

- 160 — Intake pressure sensor
- 150 — (Outdoor unit)
- 161 — Outdoor air thermistor
- 181 — Outdoor controller
- 158 — Discharge pressure protections switch
- 162 — Outdoor heat exchange thermistor
- 159 — Discharge line thermistor
- 151 — Compressor
- 152 — Four way directional control valve
- 163 — Pressure regulating valve
- 400 — (connection line)
- 371 — Branching unit controller
- 306 — Liquid line thermistors
- 307 — Gas line thermistors
- 305 — Electric valves
- 300 — (Branching unit)

## Fig. 10

Amount of refrigerant in circulation [kg/h] vs Operational frequency of compressor [Hz]

## Fig. 11

Amount of air flow [Nm³/h] vs Decompression circuit aperture pulse

# Fig. 12

S 1 — Acquire $DC_{MXT}$

S 2 — Acquire $Q_{COMP}$

S 3 — Calculate SC1

S 4 — Deviation value SC of target

S 5 — SC control modified flow quantity $Q_{RSC}$

S 6 — Target flow quantity $Q_{AMK}$

## Fig. 13

S 1 1    $DC_{1MINU}$ $DC_{2MINU}$

S 1 2    $DG_{1MINU}$ $DG_{2MINU}$

S 1 3    $DC_{MINAV}$ $DG_{MINAV}$

S 1 4    $\Delta DC_{1MIN}$ $\Delta DC_{2MIN}$

S 1 5    $\Delta DG_{1MIN}$ $\Delta DG_{2MIN}$

S 1 6    $\Delta DCG1$ $\Delta DCG2$

S 1 7    $\Delta DCG1 < \Delta DCG_{MIN}$    NO

YES

S 1 8    $Q_{RDG1} \leftarrow -K_{GT} * \Delta DCG1$

S 1 9    $\Delta DCG2 < \Delta DCG_{MIN}$    NO

YES

S 2 0    $Q_{RDG2} \leftarrow -K_{GT} * \Delta DCG2$

S 2 1    $Q_{AMK} \leftarrow Q_{AMK} + Q_{RDG}$

Fig. 14

502 — Data acquisition member

371

504

503

Electric valve controller

Central calculation member

Translation table

501

Data transmitter — 505

# Fig. 15

ΔTr signal → ΔD signal

| Temperature difference | ΔTr signal | ΔD signal |
|---|---|---|
| 5. 0 d e g | 0 x 0 a | 0 x 0 d |
| 4. 5 d e g | 0 x 0 9 | 0 x 0 c |
| 4. 0 d e g | 0 x 0 8 | 0 x 0 b |
| 3. 5 d e g | 0 x 0 7 | 0 x 0 a |
| 3. 0 d e g | 0 x 0 6 | 0 x 0 9 |
| 2. 5 d e g | 0 x 0 5 | 0 x 0 8 |
| 2. 0 d e g | 0 x 0 4 | 0 x 0 7 |
| 1. 5 d e g | 0 x 0 3 | 0 x 0 6 |
| 1. 0 d e g | 0 x 0 2 | 0 x 0 5 |
| − 0. 5 d e g | 0 x 0 1 | 0 x 0 4 |
| − 0. 0 d e g | 0 x 0 0 | 0 x 0 3 |
| − 0. 5 d e g | 0 x 3 f | 0 x 0 2 |
| − 1. 0 d e g | 0 x 3 e | 0 x 0 1 |
| − 1. 5 d e g | 0 x 3 d | 0 x 0 0 |
| − 2. 0 d e g | 0 x 3 c | 0 x 0 0 |
| − 2. 5 d e g | 0 x 3 b | 0 x 0 0 |
| − 3. 0 d e g | 0 x 3 a | 0 x 0 0 |
| − 3. 5 d e g | 0 x 3 9 | 0 x 0 0 |
| − 4. 0 d e g | 0 x 3 8 | 0 x 0 0 |
| − 5. 0 d e g | 0 x 3 7 | 0 x 0 0 |
| − 5. 5 d e g | 0 x 3 6 | 0 x 0 0 |

ΔTr signal : Commercial indoor unit thermosignal

ΔD signal : Residential indoor unit thermosignal

## INTERNATIONAL SEARCH REPORT

| International application No. |
| --- |
| PCT/JP01/03330 |

A. CLASSIFICATION OF SUBJECT MATTER
    Int.Cl⁷   F24F 5/00

According to International Patent Classification (IPC) or to both national classification and IPC

B. FIELDS SEARCHED

Minimum documentation searched (classification system followed by classification symbols)
    Int.Cl⁷   F24F5/00, F25B41/00

Documentation searched other than minimum documentation to the extent that such documents are included in the fields searched
    Jitsuyo Shinan Koho          1926-1996      Toroku Jitsuyo Shinan Koho  1994-2001
    Kokai Jitsuyo Shinan Koho   1971-2001      Jitsuyo Shinan Toroku Koho  1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP, 06-123512, A (Matsushita Electric Ind. Co., Ltd.),<br>06 May, 1994 (06.05.94),<br>Full text; Figs. 1, 2   (Family: none) | 1-3<br>4,5,8-13 |
| X<br>Y | JP, 05-288433, A (Mitsubishi Heavy Industries, Ltd.),<br>02 November, 1993 (02.11.1993),<br>Full text; Figs. 1, 2 (Family: none) | 1-3<br>4,5,8-13 |
| Y | Microfilm of the specification and drawings annexed to<br>the request of Japanese Utility Model Application<br>No. 024725/1989 (Laid-open No. 116656/1990),<br>(Sanden Corporation),<br>18 September, 1990 (18.09.90),<br>Full text; Figs. 1 to 5   (Family: none) | 1-5,8-13 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    16 May, 2001 (16.05.01) | Date of mailing of the international search report<br>    29 May, 2001 (29.05.01) |
| --- | --- |
| Name and mailing address of the ISA/<br>    Japanese Patent Office | Authorized officer |
| Facsimile No. | Telephone No. |

Form PCT/ISA/210 (second sheet) (July 1992)